# EUROPEAN PATENT APPLICATION

(11) **EP 4 455 190 A1**
(43) Date of publication of application: **30.10.2024**
(21) Application number: 22910903.8
(22) Date of filing: 07.12.2022
(51) Int. Cl.: C08G 77/52

(54) **MACROMOLECULAR COMPOUND**

(30) Priority: 21.12.2021 JP 2021207537
(71) Applicant: Shiseido Company, Ltd., Chuo-ku Tokyo 104-0061 (JP); The University of Tokyo, Bunkyo-ku, Tokyo 113-8654 (JP)
(72) Inventor: MATSUO, Ayano, Tokyo 104-0061 (JP); GILLET, Renaud, Tokyo 104-0061 (JP); SOGABE, Atsushi, Tokyo 104-0061 (JP); HONDA, Satoshi, Tokyo 113-8654 (JP); OKA, Minami, Tokyo 113-8654 (JP)
(74) Representative: Ter Meer Steinmeister & Partner
(86) International application number: PCT/JP2022/045093
(87) International publication number: WO 2023/120191

(57) **Abstract**

A polymer compound in which coumarin or a derivative thereof is bonded to at least one terminal of a skeletal polymer. A flow property of the polymer compound is reversibly changeable from a first state to a second state by irradiation with light at a first wavelength and from the second state to the first state by irradiation with light at a second wavelength different from the first wavelength.

## Description

### TECHNICAL FIELD

The present invention relates to a polymer compound.

### BACKGROUND OF THE INVENTION

Materials whose state changes in response to external stimuli are known. For example, Patent Document 1 describes a crosslinked polymer having photoresponsiveness that can be reversibly changed from a solid state to a liquid state by cleavage of crosslinks by a light stimulus.

### RELATED-ART DOCUMENT

### Patent Document

Patent Document 1: Japanese Unexamined Patent Application Publication No. 2017-149793

### SUMMARY OF THE INVENTION

### Problems to be Solved by the Invention

However, in the case of the compound described in Patent Document 1, when the application of the light stimulus is stopped, the cleaved crosslinks are re-formed. Therefore, the compound cannot be used in an environment without the light stimulus in their state after being changed by the light stimulus. For such purposes, compounds with photoresponsiveness different from conventional ones are required.

In view of the above, one aspect of the present invention is to provide a reversibly changeable material whose state changes when a light stimulus is applied, the state after the change can be maintained even when the light stimulus is stopped, and the state can be returned to the original state by another stimulus.

### Means for Solving the Problems

In one aspect of the present invention for solving the problem, a polymer compound in which coumarin or a derivative thereof is bonded to at least one terminal of a skeletal polymer, wherein a flow property of the polymer compound is reversibly changeable from a first state to a second state by irradiation with light at a first wavelength and from the second state to the first state by irradiation with light at a second wavelength different from the first wavelength.

### Effects of the Invention

According to one aspect of the present invention, a reversibly changeable material whose state changes when a light stimulus is applied, the state after the change can be maintained even when the light stimulus is stopped, and the state can be returned to the original state by another stimulus, can be provided.

### BRIEF DESCRIPTION OF THE DRAWINGS

[FIG. 1] FIG. 1 is a graph indicating a result of viscoelastic evaluation of Example 1.
[FIG. 2] FIG. 2 is a graph indicating a result of viscoelastic evaluation of Example 2.
[FIG. 3] FIG. 3 is a graph indicating a result of viscoelastic evaluation of Example 3.

### DETAILED DESCRIPTION OF THE INVENTION

### <Change in Flow Property>

An embodiment of the present invention is a polymer compound in which coumarin or a derivative thereof is bonded to at least one terminal of a skeletal polymer. The polymer compound has photoresponsiveness in that a flow property can be reversibly changed between a first state and a second state by a light stimulus. More specifically, the flow property of the polymer compound according to the present embodiment change from the first state to the second state by irradiation with light at a first wavelength, and can be returned from the second state to the original first state by irradiation with light at a second wavelength different from the first wavelength.

In the present specification, a change in the flow property (or a change in fluidity) is a change in physical properties related to the property called viscosity, elasticity, or viscoelasticity of a compound. More specifically, the change in the flow property may be a change in one or more physical properties of elastic modulus such as storage modulus G' (Pa) and loss modulus G" (Pa); viscosity; shear rate (shear strength); thixotropic index; and other rheological physical properties. The change in the flow property may be a change from one of the three states of matter to another state. Thus, for example, it may be a change between a solid or gel state and a liquid or sol state. In the present specification, a change between the first state and the second state is not simply caused by a change in crystallinity and the like, but is caused by a change in the molecular structure itself. The change between the first state and the second state includes a change accompanied by the formation or cleavage of a covalent bond.

The above change may be such that, for example, the difference in the storage modulus G' between the first state with high fluidity and the second state with low fluidity is preferably 300 Pa or more and 10,000 Pa or less. The difference in the loss modulus G" between the first state with high fluidity and the second state with low fluidity may be 300 Pa or more and 100,000 Pa or less.

The light irradiated to change the state of the polymer compound is preferably ultraviolet light, both of the light at the first wavelength and the light at the second wavelength different from the first wavelength. The range of the first wavelength may be 300 nm or more and 390 nm or less, preferably 350 nm or more and 380 nm or less, and more preferably 360 nm or more and 370 nm or less. The range of the second wavelength may be 200 nm or more and 290 nm or less, preferably 230 nm or more and 270 nm or less, and more preferably 250 nm or more and 270 nm or less. The first wavelength is preferably 365 nm and the second wavelength is preferably 254 nm.

In the present embodiment, it is preferable that irradiation with the light at the first wavelength causes molecules of the polymer compound to crosslink with each other to form a network structure, reducing the fluidity of the polymer compound, and irradiation with the light at the second wavelength causes cleavage of the crosslink. The first wavelength that causes crosslinking may be larger than the second wavelength that causes cleavage of the crosslink.

In the polymer compound according to the present embodiment, once light irradiation is performed, even when the light irradiation is stopped, the state of the flow property changed by the irradiation can be maintained. That is, when the first state is changed to the second state by the irradiation with the light at the first wavelength, even when the irradiation with the light at the first wavelength is stopped, the flow property of the second state can be maintained as long as there is no irradiation with the light at the second wavelength or other stimulus that causes a change to the first state. Also, when the second state is changed to the first state by the irradiation with the light at the second wavelength, even when the irradiation with the light at the second wavelength is stopped, the flow property of the first state can be maintained as long as there is no irradiation with the light at the first wavelength or other stimulus that causes a change to the second state. In the polymer compound according to the present embodiment, after the crosslink between molecules is formed by the irradiation with the light at the first wavelength, the formed crosslink is maintained even when the irradiation is stopped, and when the crosslink between molecules is cleaved by the irradiation with the light at the second wavelength, the cleaved crosslink is maintained even when the irradiation is stopped. Therefore, for example, by alternately irradiating the light at the first wavelength and the light at the second wavelength, the polymer compound according to the present embodiment can repeatedly change reversibly between the first state and the second state.

The light irradiation to the polymer compound according to the present embodiment may be carried out under the conditions of 0 to 100°C, and preferably is carried out at normal temperature (5 to 35°C). The intensity of the irradiated light is preferably 1 mW/cm² or more. The intensity of the light at the first wavelength is preferably 5 mW/cm² or more, and the intensity of the light at the second wavelength is preferably 1 mW/cm² or more.

The change in the flow property due to the light irradiation may occur either in a system in which the polymer compound is mixed with another component such as a dispersion solvent, or in a system in which the polymer compound is not mixed with another component. In the present embodiment, because the flow property of the polymer compound can be reversibly changed by the light irradiation of the polymer compound even in a system that does not contain a solvent, there is no need to consider evaporation of the solvent during use, and the polymer compound can be used in various applications.

### <Structure of Polymer Compound>

The polymer compound is one in which coumarin or a derivative thereof is bonded to at least one terminal of a skeletal polymer constituting a main chain. The skeletal polymer is not particularly limited as long as coumarin or a derivative thereof can be bonded to form a polymer compound whose flow property can be reversibly changed between the first state and the second state by irradiation with ultraviolet light of different wavelengths as described above. The skeletal polymer may have high fluidity at normal temperature, preferably in a liquid or sol state.

Examples of the skeletal polymer include a polysiloxane polymer, a polyacrylate polymer, a polymethacrylate polymer, a polystyrene polymer, a polyethylene polymer, a polyamide polymer, a polyester polymer, a polyurethane polymer, and the like. Among these, a polysiloxane polymer is preferable, and polydimethylsiloxane (PDMS) is preferable. The skeletal polymer may be used alone or in combination of two or more of the above polymers.

The number average molecular weight of the skeletal polymer may be preferably 500 or more and 100,000 or less, and more preferably 1,000 or more and 50,000 or less. The skeletal polymer may have a glass transition temperature of preferably -150°C or more and 25°C or less, and more preferably -120°C or more and 0°C or less.

Further, the skeletal polymer preferably has a branched structure, and more preferably has a structure in which a plurality of branched chains (arms) extend from a central core. The central core portion preferably includes a carbon atom or a benzene ring. In particular, it is preferable that the central core portion is a benzene ring, because the structure of the skeletal polymer, by extension, the structure of the polymer compound is stabilized, making it possible to more reliably change the flow property between the first state and the second state. The number of the branched chains (the number of the arms extending from the central core) bounded to the one central core is preferably 2 or more and 8 or less (that is, the skeletal polymer has a two- to eight-branched structure), more preferably 2 or more and 5 or less (that is, the skeletal polymer has a two- to five-branched structure), or more preferably 3 or more and 6 or less (that is, the skeletal polymer has a three- to six-branched structure). The number of the branched chains bounded to the central core in the skeletal polymer is more preferably 3 (that is, the skeletal polymer has a three-branched structure).

Further, the skeletal polymer is preferably a polydimethylsiloxane having a three-branched structure including a benzene ring as the central core. More specifically, the skeletal polymer is more preferably a three-armed star-shaped polydimethylsiloxane (PDMS) represented by the following formula. 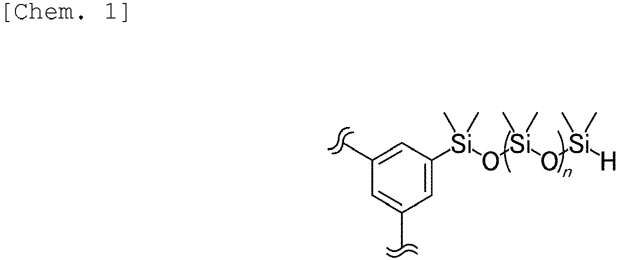 [In the formula, n is 1 or more and 150 or less, and all three branched chains have the same structure.] When the terminals of the branched chains are composed of hydrosilane as described above, the polymer may be called a three-armed star-shaped polydimethylsiloxane with hydrosilane terminals.

The polymer compound according to the present embodiment includes a group (a coumarin moiety) derived from coumarin or a derivative thereof bonded to at least one terminal of the skeletal polymer described above. In the present embodiment, the coumarin moiety of one molecule and the coumarin moiety of another molecule are bonded by irradiation with the light at the first wavelength, changing the flow property from the first state to the second state, and the bond is broken by irradiation with the light at the second wavelength, changing the flow property from the second state to the first state. Coumarin or a derivative thereof may be bonded to at least one terminal of the skeletal polymer, but it is preferable that coumarin or a derivative thereof is bonded to all terminals of the skeletal polymer, because the crosslinking points between the molecules increase. By bonding coumarin or a derivative thereof to the terminal of the skeletal polymer rather than as a side chain, it is possible to prevent aggregation of the coumarin moieties, which could cause phase separation.

Coumarin or a derivative thereof is bonded to at least one terminal of the branched chains of the skeletal polymer. Coumarin or a derivative thereof may be bonded to preferably 50% or more, more preferably 60% or more, and even more preferably 80% or more of the branched chains of the skeletal polymer. Coumarin or a derivative thereof is preferably bonded to all the terminals of the branched chains of the skeletal polymer.

The derivative of coumarin is not particularly limited as long as it does not interfere with the reversible change in the flow property of the polymer compound by the light irradiation with different wavelengths as described above in the present embodiment, and may be a derivative in which a substituent is introduced into coumarin. In other words, the polymer compound according to the present embodiment may be a polymer compound having a substituted or unsubstituted coumarin group (a coumaryl group) at the terminal of the skeletal polymer.

The polymer compound according to the present embodiment having coumarin bonded to at the terminal may be, for example, a polysiloxane polymer represented by the following formula. 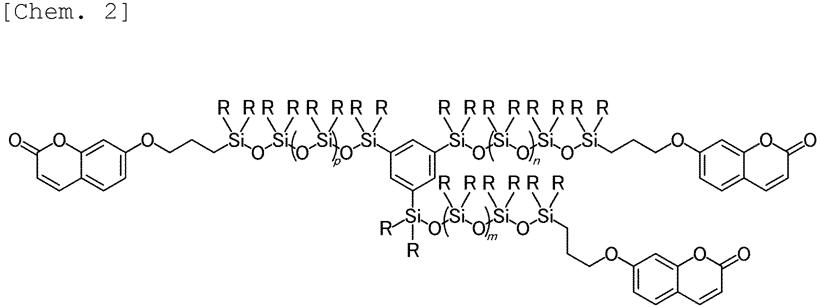 [R each independently represents hydrogen or an alkyl group, and n, m, and p are each independently an integer of 1 or more and 150 or less.] In the above formula, it is preferable that 1% or more of R in one branched chain is hydrogen, and that all of R is hydrogen. When R is an alkyl group, it is preferably a linear or branched alkyl group having 1 to 20 carbon atoms. It is preferable that n, m, and p are the same, and it is more preferable that the three branched chains branched from benzene ring as the central core have the same structure. When coumarin is bonded to the terminals of the branched chains as described above, the polymer may be called a three-armed star-shaped polydimethylsiloxane with coumarin terminals.

### <Structure Change of Polymer Compound by Light Stimulus>

Next, a structure change of the polymer compound by the light irradiation with different wavelengths will be described more specifically. In the formula below, the first state in which a three-armed star-shaped polydimethylsiloxane (PDMS) having a coumarin group at the terminal of each branched chain is not crosslinked is illustrated in the upper row, and the second state in which the coumarin groups are bonded with each other and crosslinked between molecules is illustrated in the lower row. In the present embodiment, the first state is a high-flow state with high fluidity, and the second state is a low-flow state with low fluidity.

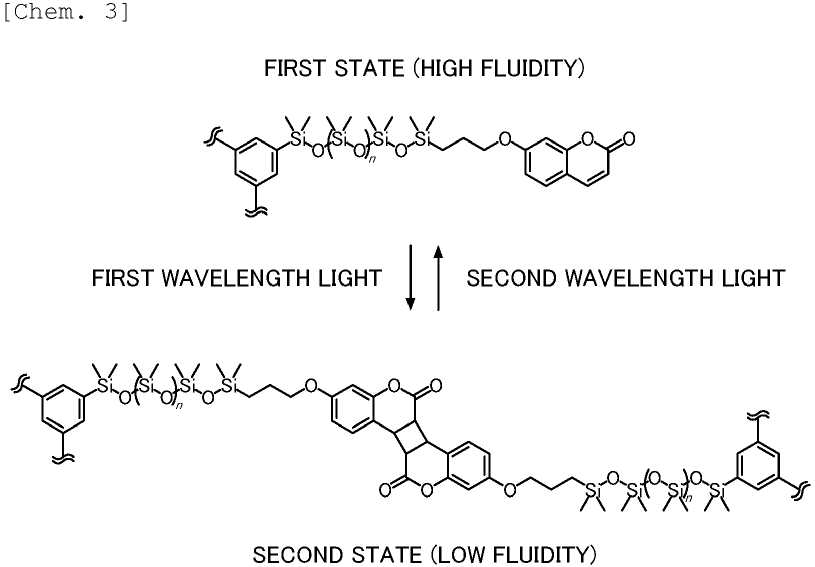

In the above formula, n is an integer of 1 or more and 150 or less, and the three branched chains may have the same structure. As illustrated in the above formula, by irradiating the light with the first wavelength, it is possible to change from the first state with high fluidity to the second state, and by irradiating the light with the second wavelength, the second state with low fluidity can be changed to the first state. Both the crosslinking reaction from the first state to the second state and the crosslinking cleavage reaction from the second state to the first state can be performed under conditions common in the art. However, an agent for accelerating the reaction may be used.

The number average molecular weight of the polymer compound is preferably 500 or more and 100,000 or less, more preferably 1,000 or more and 50,000 or less. When compared under the same irradiation conditions (even when the first wavelength and the second wavelength are respectively the same), the tendency of the change in viscoelasticity may differ depending on the number average molecular weight of the polymer compound. Therefore, it is also possible to control the viscoelasticity of the compound by changing its molecular weight.

The present embodiment may be a method of using a polymer compound. The method of using a polymer compound may include: irradiating a polymer compound to which coumarin or a derivative thereof is bonded to at least one terminal of a skeletal polymer with light with a first wavelength, thereby reversibly changing a flow property of the polymer compound from a first state to a second state; stopping the irradiating of the light with the first wavelength and maintaining the second state; and irradiating the polymer compound with light with a second wavelength different from the first wavelength, thereby reversibly changing the flow property of the polymer compound from the second state to the first state.

### <Application and the like>

According to the present embodiment, the flow property of the polymer compound can be changed, for example, between a solid and a liquid state, or between a gel and a sol state, by different light stimuli without using heating or the like. Therefore, it can be suitably used in environments where heating is undesirable. Also, in the present embodiment, by irradiating only a part of the entire prepared volume of the polymer compound with ultraviolet light at a predetermined wavelength, the flow property of only the part of the volume can be changed.

In addition, in the polymer compound according to the present embodiment, even without continuing to apply light stimulation (without continuing light irradiation), once the flow property has changed, the changed flow property can be maintained even in an environment without light stimulus. Therefore, because the changed state can be maintained even in environments where continuous light irradiation is not possible, it can be suitably used as a material for 3D printers, for example.

### Examples

### <Synthesis of Polymer Compound>

Polymer compounds having a coumarin group at the terminal were synthesized as follows.

### (Example 1)

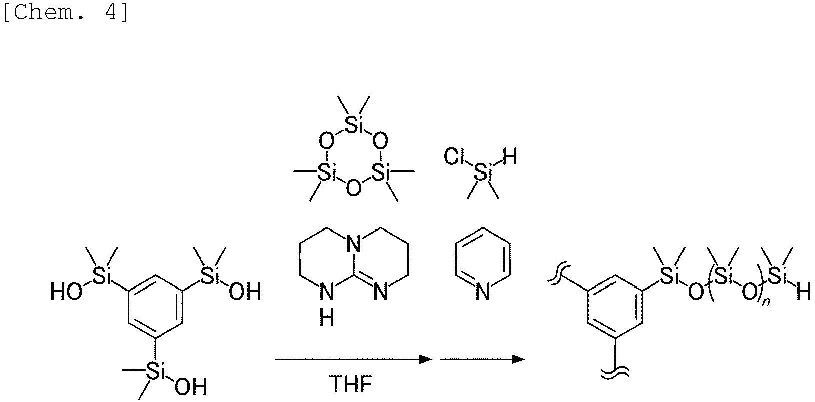

A trifunctional silanol (I₃) (140 mg), 1,5,7-triazabicyclo[4.4.0]dec-5-ene (TBD) (97 mg), and tetrahydrofuran (THF) (11 ml) were mixed, and a solution of hexamethylcyclotrisiloxane (D3) (14 g) in THF (24 ml) was added, and the mixture was stirred at 25°C. After 1.5 hours, pyridine (6.7 ml) and chlorodimethylsilane (3.1 ml) were added in this order, and the mixture was stirred for another 23 hours. The reaction mixture was poured into excess water/hexane, and the hexane layer was washed with water and then dried and concentrated with sodium sulfate. The obtained oily crude product was washed with methanol and acetone. Chloroform was added to obtain a homogeneous solution, and the volatile component was distilled off under reduced pressure. Accordingly, a colorless oily three-armed star-shaped polydimethylsiloxane with hydrosilane terminals (three-armed star-shaped PDMS with hydrosilane terminals) was obtained. The yield was 10.1 g.

In addition, a coumarin moiety was introduced at the terminal of the branched chain of the three-armed star-shaped PDMS with hydrosilane terminals as follows.

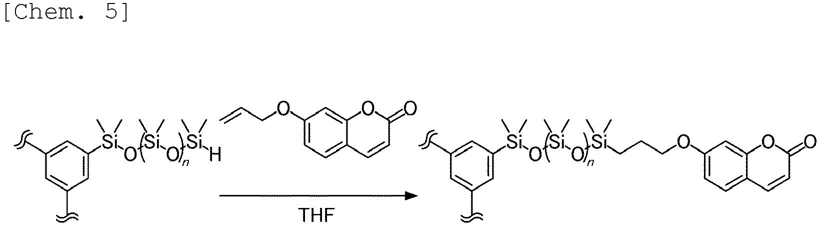

The three-armed star-shaped PDMS with hydrosilane terminals (2.0 g), 7-allylcoumarin (260 mg), Karstedt catalyst (0.10 ml), and THF (5 ml) were mixed, and stirred under reflux for 14 hours. The reaction mixture was concentrated and washed with methanol and acetone, and the volatile component was distilled off under reduced pressure. Accordingly, 1.7 g of oily three-armed star-shaped PDMS with coumarin terminals represented by the above formula was obtained. As a result of GPC measurement, the number average molecular weight Mn (RI) of the three-armed star-shaped PDMS with coumarin terminals was 12,800 (D = 1.27).

### (Example 2)

The synthesis was carried out in the same manner as in Example 1 except that the amount of raw material used in Example 1 was changed, and a three-armed star-shaped PDMS with coumarin terminals having a number average molecular weight of Mn (RI) 24,000 (D = 1.26) was obtained.

### (Example 3)

The synthesis was carried out in the same manner as in Example 1 except that the amount of raw material used in Example 1 was changed, and a three-armed star-shaped PDMS with coumarin terminals having a number average molecular weight of Mn (RI) 23,900 (D = 1.47) was obtained.

### <Evaluation of Viscoelastic Change>

Each of the samples of Examples 1 to 3 was alternately irradiated with ultraviolet light with a wavelength of 365 nm (UV₃₆₅) (150 mW/cm²) and ultraviolet light with a wavelength of 254 nm (UV₂₅₄) (17 mW/cm²), and a storage modulus G' (Pa) and a loss modulus G" (Pa) were measured over time. A rotary rheometer (MCR-102, manufactured by Anton Paar GmbH) was used for the measurement. The sample was applied to the surface of a lower glass plate to have a thickness of 0.10 mm, and a parallel plate (diameter 12 mm) was placed and rotated at a frequency of 5 Hz.

Irradiation with ultraviolet light was stopped when convergence was observed in the change in viscoelasticity, then irradiation with ultraviolet light with a different wavelength was started, and similarly stopped when convergence was observed in the change in viscoelasticity. More specifically, UV irradiation with a wavelength of 365 nm was carried out from the start of irradiation until the 1,000 second mark, and then UV irradiation with a wavelength of 254 nm was carried out from the 1,200 second mark until the 1,600 second mark. Thereafter, UV irradiation was carried out in the same manner as presented in Table 1.

**[Table 1]**

| TIME [s] | 0 | 60 | 1000 | 1200 | 1600 | 1800 | 2740 | 2940 | 4400 | 4660 | 5600 | 5800 |
|---|---|---|---|---|---|---|---|---|---|---|---|---|
| UV WAVELENGTH [nm] on/off | off | 365 on | off | 245 on | off | 365 on | off | 254 on | off | 365 on | off | 254 on |

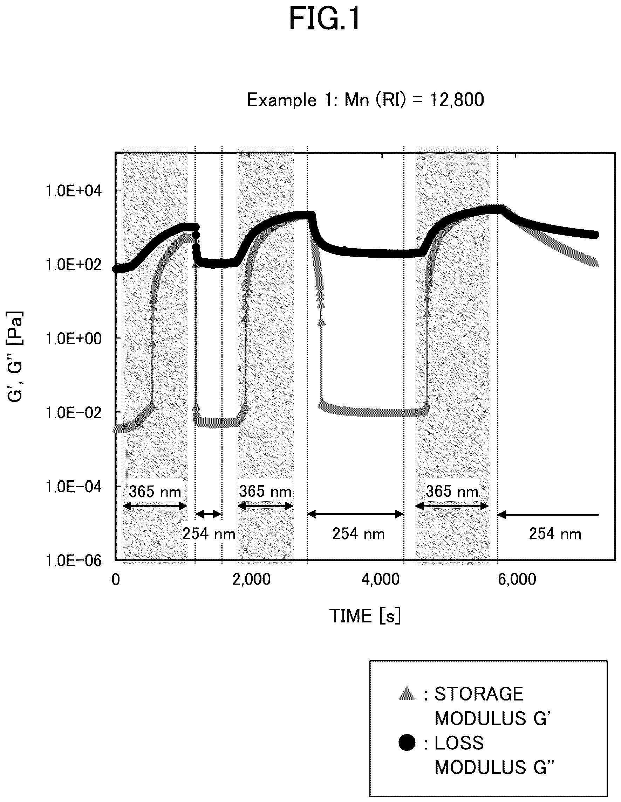

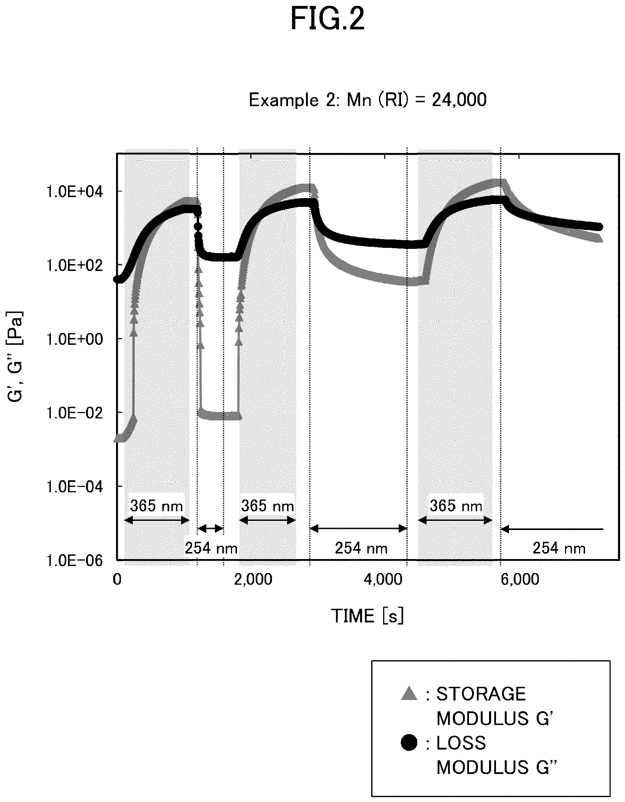

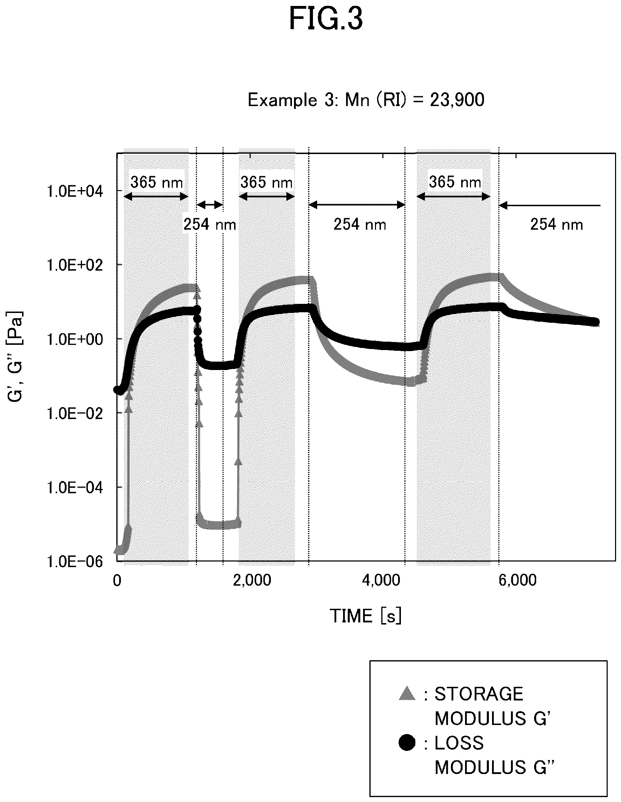

The results of the evaluation of Examples 1 to 3 are presented in FIGS. 1 to 3, respectively. As illustrated in FIGS. 1 to 3, in all of the three-armed star-shaped PDMS with coumarin terminals with different molecular weights, when irradiated with ultraviolet light of different wavelengths alternately, the viscoelasticity changed repeatedly and reversibly. The appearance of the polymer compound was also visually observed, and it was confirmed that the compound changed into a solid state by irradiation with ultraviolet light with a wavelength of 365 nm, and the compound changed into a liquid state by irradiation with ultraviolet light with a wavelength of 254 nm. It was also found that compared to Example 1, which has a small molecular weight, Examples 2 and 3, which have a large molecular weight, tend to have stronger elasticity, with the storage modulus G' exceeding the loss modulus G" in the second state (in a solid or low-flow state).

The present invention has been described based on specific embodiments and specific Examples. However, these embodiments and Examples are merely presented as examples, and the present invention is not limited by the embodiments and Examples described above. Various changes, modifications, replacements, deletions, additions, and combinations are applicable within the scope of the disclosure of the present invention.

The present application claims priority to Japanese Patent Application No. 2021-207537 filed December 21, 2021, the entire contents of which are incorporated herein by reference.

## Claims

1. A polymer compound in which coumarin or a derivative thereof is bonded to at least one terminal of a skeletal polymer, wherein
a flow property of the polymer compound is reversibly changeable from a first state to a second state by irradiation with light at a first wavelength and from the second state to the first state by irradiation with light at a second wavelength different from the first wavelength.

2. The polymer compound according to claim 1, wherein groups derived from the coumarin or the derivative thereof form a crosslink with each other between molecules by irradiation with light at the first wavelength and the crosslink is cleaved by irradiation with light at the second wavelength.

3. The polymer compound according to claim 1 or 2,
wherein the skeletal polymer is polysiloxane.

4. The polymer compound according to claim 1 or 2,
wherein the skeletal polymer has a glass transition temperature of -120°C or more and 0°C or less.

5. The polymer compound according to claim 1 or 2,
wherein the skeletal polymer is a branched polymer in which a number of branched chains is 3 or more and 6 or less.

6. The polymer compound according to claim 1 or 2, wherein
a structure of the polymer compound is represented by a formula below, 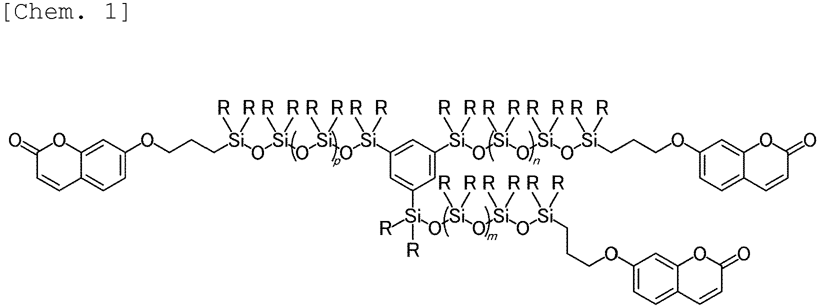 (in the formula, R each independently represents hydrogen or an alkyl group, and n, m, and p each independently is an integer of 1 or more and 150 or less).

7. The polymer compound according to claim 1 or 2,
wherein the skeletal polymer has a number average molecular weight of 1,000 or more and 100,000 or less.

8. The polymer compound according to claim 1 or 2,
wherein the first wavelength is 350 nm or more and the second wavelength is 260 nm or less.

9. A polymer compound, wherein
a structure of the polymer compound is represented by a formula below, 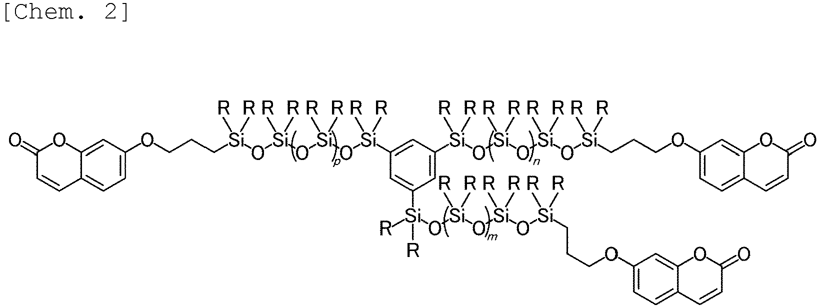 (in the formula, R each independently represents hydrogen or an alkyl group, and n, m, and p each independently is an integer of 1 or more and 150 or less).
